# EUROPÄISCHE PATENTSCHRIFT

(11) **EP 1 479 476 B1**
(45) Veröffentlichungstag und Bekanntmachung des Hinweises auf die Patenterteilung: **07.01.2009**
(21) Anmeldenummer: 03011503.4
(22) Anmeldetag: 21.05.2003
(51) Int. Cl.: B23Q 7/14

(54) **Ladeeinrichtung für Werkstücke**
Loading device for workpieces
Dispositif de chargement de pièces

(43) Veröffentlichungstag der Anmeldung: 24.11.2004
(73) Patentinhaber: Cross Hüller GmbH, 71636 Ludwigsburg (DE)
(72) Erfinder: Schwarz, Eberhard, 72202 Nagold (DE); Berger, Dr. Manfred, 74189 Weinsberg (DE)
(74) Vertreter: Rau, Manfred

(56) Entgegenhaltungen:
- EP-A- 0 852 988
- DE-A- 3 212 272
- DE-A- 19 642 042
- GB-A- 1 456 385

## Beschreibung

Die Erfindung bezieht sich auf eine Ladeeinrichtung zum Transport von Werkstücken von einer Bereitstellung zu einer Bearbeitungsmaschine gemäß dem Oberbegriff des Anspruches 1.

Aus der DE 196 42 042 A1 ist eine derartige Ladevorrichtung für eine von einer Bereitstellung des Werkstückes aus zu beladende Bearbeitungsmaschine bekannt, wobei auf einer hochgelegenen Führungsbahn oberhalb der Bearbeitungsmaschine ein Ladeschlitten mit Schwenkarm und Werkstückgreifer zum Transport der Werkstücke verfahrbar ist. Bei Fertigungssystemen mit oberhalb der Werkzeugmaschinen angeordneten derartigen Ladevorrichtungen gehört es zum Stand der Technik, zwischen den Maschinen, insbesondere zwischen dem Bereitstelaungsplatz und dem Bearbeitungsraum Bleche, insbesondere Blechwannen stationär anzuordnen, die sowohl als Schutz gegen ein Herunterfahren des Laders im Fehlerfall dienen als auch von den Werkstücken heruntertropfende Kühlschmierstoffe und Späne auffangen. Die Kosten derartiger Konstruktionen sind wegen der häufig großen Entfernungen relativ hoch.

Aus GB 1 456 385 A ist eine weitere Ladevorrichtung nach dem Oberbegriff des Anspruches 1 bekannt, bei der Werkstücke auf Paletten auf einer Führungsbahn zu einer Bearbeitungsmaschine gefördert und auf einer hierzu parallelen Führungsbahn nach der Bearbeitung abtransportiert werden. Die Paletten werden direkt von der einen Führungsbahn auf die andere Führungsbahn verschoben. Die Führungsbahn und die Bearbeitungsmaschine werden von einem Ladeportal überbrückt, auf dem eine Einrichtung zum Transport und zur Abgabe bzw. Aufnahme der Werkstücke an bzw. von der Bearbeitungsmaschine verfahrbar angeordnet ist. Diese Transporteinrichtung greift die Werkstücke von einer Palette, bringt sie zur Bearbeitungsstelle der Bearbeitungsmaschine und transportiert sie von dort zurück zu einer anderen Palette, die nach dem Auffüllen mit bearbeiteten Werkstücken abtransportiert wird.

Der Erfindung liegt daher die Aufgabe zu Grunde, eine Ladeeinrichtung der gattungsgemäßen Art mit einfachen, effektiven und preiswerten Auffangeinrichtungen vorzuschlagen.

Die Lösung dieser Aufgabe ist im Anspruch 1 angegeben. Die Unteransprüche 2 bis 6 enthalten sinnvolle Ausfübrungsformen dazu.

Erfindungsgemäß ist vorgesehen, dass mit den verfahrbaren Einrichtungen auch ein oder mehrere unter den Werkstücken angeordnete wannenartige Auffangeinrichtungen an dem Ladeportal verschiebbar angeordnet sind.

Im Gegensatz zu den zum Stand der Technik gehörigen stationären Blechwannen sind die erfindungsgemäßen Auffangeinrichtungen ebenfalls an den Fahrschienen des Ladeportales gleichzeitig mit den Werkstücken verfahrbar, so dass sie während des Transportes der Werkstücke zu den Werkzeugmaschinen immer unterhalb der Werkstücke angeordnet sind und heruntertropfende Kühlschmierstoffe bzw. herunterfallende Späne auffangen. Oberhalb der Bearbeitungsstelle an der Bearbeitungsmaschine und gegebenenfalls auch oberhalb der Bereitstellung können die Werkstücke dann mit Hilfe eines Linear-Roboters, eines Knickarmroboters oder ähnlicher Einrichtungen, an denen ein Werkstückgreifer angeordnet ist, mit einer im Wesentlichen senkrechten Bewegung auf den Bearbeitungstisch oder das Werkstücktransportband abgesetzt oder von diesen aufgenommen werden. Bei Verwendung eines Linear-Roboters kann dabei das Werkstück in einer vertikalen Bewegung abgesenkt und aufgenommen werden, wenn die Auffangeinrichtung relativ zum Linear-Roboter in eine derartige Position verschoben ist, dass der senkrechte Verfahrweg freigegeben ist. Hierzu kann im Boden der Auffangeinrichtung eine Übergabeöffnung angeordnet sein. Die Auffangeinrichtung kann erfindungsgemäß als Werkstückspeicher ausgebildet sein und dann auch eine Vielzahl von Werkstücken aufnehmen. Zur Aufnahme und Abgabe der Werkstücke von bzw. an einem bestimmten Speicherplatz wird die Auffangeinrichtung unterhalb des angehobenen Werkstückgreifers linear verschoben.

Bei Verwendung eines Knickarmroboters hat es sich als günstig erwiesen, die Werkstücke von einem oder mehreren Werkstückspeichern aufzunehmen bzw. daran abzugeben, die seitlich neben dem senkrechten Transportweg angeordnet sind.

Die Steuerung der Ladeeinrichtung kann erfindungsgemäß derart gestaltet werden, dass der Lader bzw. der Werkstückgreifer auf der Fahrschiene nur dann verfahren kann, wenn der Werkstückgreifer oberhalb der Auffangeinrichtung in einer Schutzstellung positioniert ist. Wenn also die Relativbewegung der Auffangeinrichtung zu den Robotern verhindert ist, kann die gesamte Ladeeinrichtung auf der Fahrschiene des Ladeportales verfahren werden.

Die Erfindung wird anhand der beigefügten Figuren 1 bis 4 beispielsweise näher erläutert. Es zeigen
- Fig. 1: eine perspektivische Darstellung einer Ladeeinrichtung mit zwei Linear-Robotern 5, 6, wobei der Linear-Roboter 5 durch die in der Auffangeinrichtung 7 angeordnete Übergabeöffnung 19 mit dem Greifer 17 zur Übergabe bzw. Aufnahme des Werkstückes 3 dicht über dem Drehtisch 2 der Bearbeitungsmaschine 1 angeordnet ist.
- Fig. 2: eine entsprechende Anordnung gemäß Fig. 1, wobei beide Linear-Roboter 5 und 6 mit ihren Greifern 17 in der oberen Position im Wesentlichen oberhalb der Übergabeöffnung 19 angeordnet sind.
- Fig. 3: eine entsprechende Darstellung wie bei Fig. 2, wobei die beiden Linear-Roboter 5, 6 in der oberen Position oberhalb der Auffangeinrichtung 7 neben der Übergabeöffnung 19 in der Schutzstellung angeordnet sind.
- Fig. 4: eine perspektivische Darstellung einer Ladeeinrichtung mit einem Knickarmroboter 12.

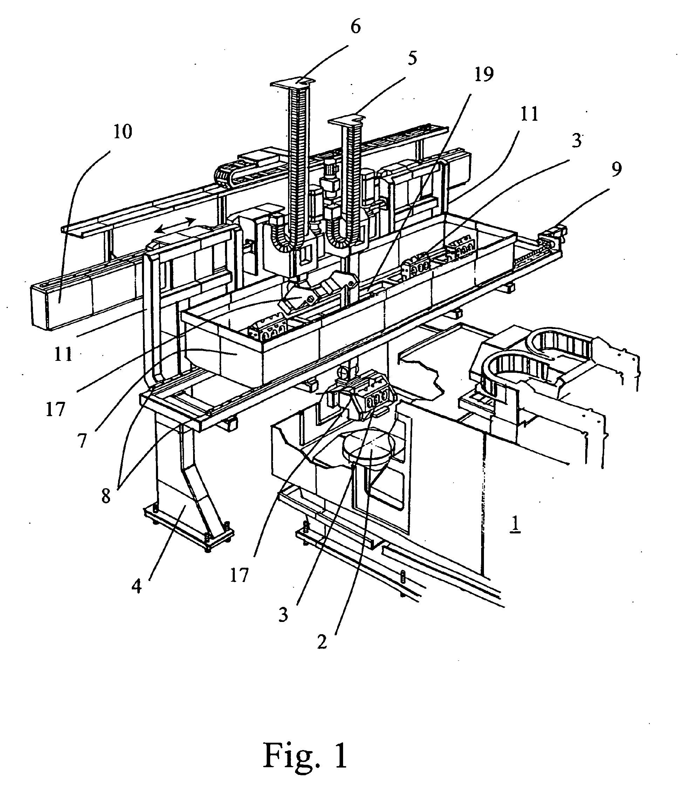

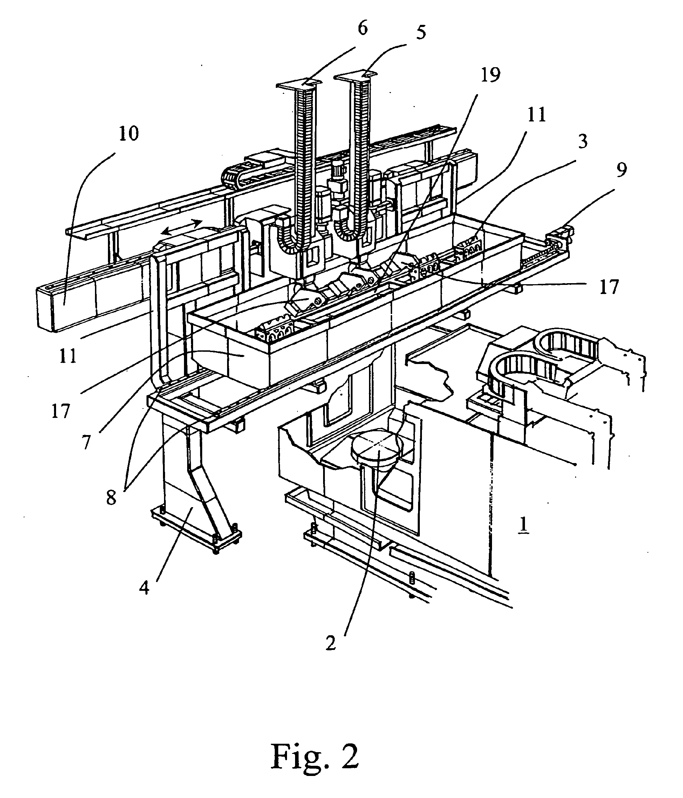

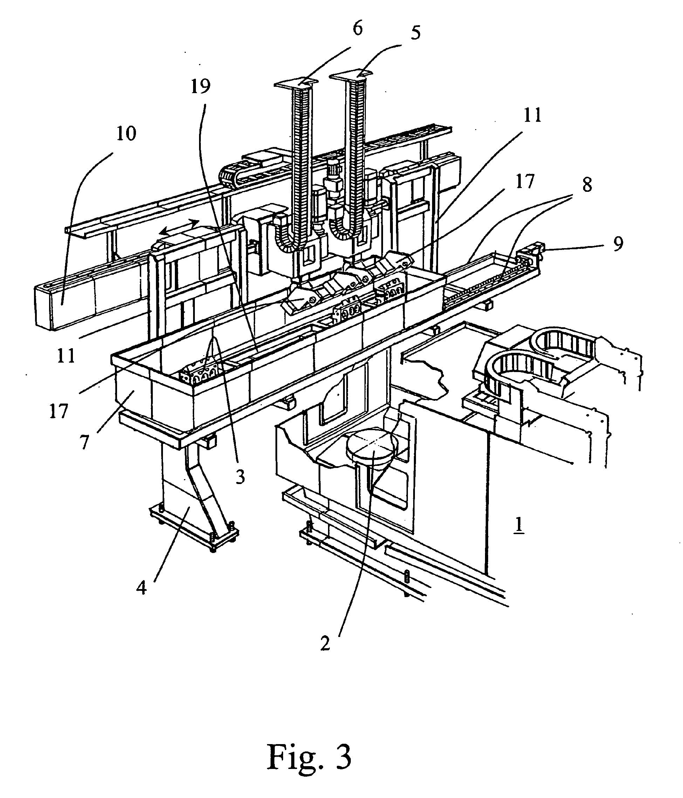

Bei den Ausführungsformen nach den Figuren 1 bis 4 sind die Ladeeinrichtungen jeweils an einem Ladeportal angeordnet, das auch eine größere Verbindung zwischen Bearbeitungsmaschine 1 und einem nicht dargestellten Ort zur Bereitstellung der Werkstücke überbrücken kann. Nach den Figuren 1 bis 3 besteht das Ladeportal aus einer waagerecht angeordneten Fahrschiene 10, die auf senkrechten Stützen 4 fest angeordnet ist. Auf der Fahrschiene 10 sind die beiden Linear-Roboter 5 und 6 gemeinsam in Richtung des Doppelpfeiles verfahrbar. In Transportrichtung werden diese beiden Linear-Roboter 5, 6 von Halteeinrichtungen 11 eingerahmt, die ebenfalls nur gemeinsam mit ihnen auf der Fahrschiene 10 verfahrbar sind. Auf den Halteeinrichtungen 11 befinden sich die Fahrschienen 8 für die Auffangeinrichtung 7. Die Auffangeinrichtung 7 kann mit Hilfe des Antriebes 9 auf den Fahrschienen 8 relativ zu den Linear-Robotern 5, 6 parallel zur Fahrschiene 10 verschoben werden.
Mit Hilfe einer einfachen Steuerung kann die Auffangeinrichtung 7 relativ zu den Linear-Robotern 5, 6 mit den daran befestigten Werkstückgreifern 17 in der in Fig. 3 dargestellten Position zum Schutz vor einem unbeabsichtigten Abwärtsfahren der Linear-Roboter 5, 6, oder zum Schutz gegen herabfallende Werkstücke 3 aus dem Werkstückgreifer 17 positioniert werden. Alle Einrichtungen 3 bis 7, 11 und 17 werden nur gemeinsam in Richtung des Doppelpfeiles auf der Fahrschiene 10 verfahren.

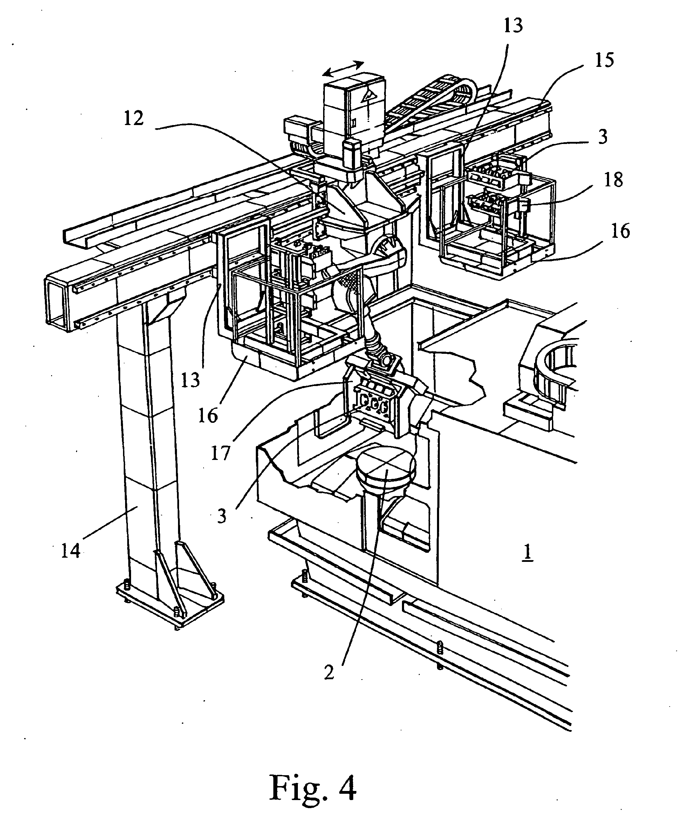

In der Fig. 4 ist der Knickarmroboter 12 auf der Fahrschiene 15, die fest auf den Stützen 14 gelagert ist, gemeinsam mit den Halteeinrichtungen 13 in Richtung des Doppelpfeiles verfahrbar. An den Halteeinrichtungen 13 in Verfahrrichtung vor und hinter dem Knickarmroboter 12 sind die Auffangeinrichtungen 16 mit den darauf positionierten Werkstückspeichern 18 angeordnet. Bei der Darstellung der Fig. 4 ist der Knickarmroboter 12 mit dem daran beweglich befestigten Werkstückgreifer 17 und dem von diesem gehaltenen Werkstück 3 in der Position dicht über dem Drehtisch 2 der Bearbeitungsmaschine 1 dargestellt. Für die Bewegung auf der Fahrschiene 15 wird der Knickarmroboter 12 mit derm Werkstückgreifer 17 in eine, nicht dargestellte, Schutzstellung auf einer der beiden Auffangeinrichtungen 16 positioniert.

### Bezugszeichenliste:

- 1: Bearbeitungsmaschine
- 2: Drehtisch
- 3: Werkstück
- 4: Stütze
- 5: Linear-Roboter (an 10 verfahrbar)
- 6: Linear-Roboter (an 10 verfahrbar)
- 7: Auffangeinrichtung (auf 8 verschiebbar)
- 8: Fahrschiene (für 7)
- 9: Antrieb (für 7)
- 10: Fahrschiene (fest an 4; für 5, 6 und 11)
- 11: Halteeinrichtung (für 8)
- 12: Knickarmroboter (auf 15 verfahrbar)
- 13: Halteeinrichtung (für 16, 18; auf 15 verfahrbar)
- 14: Stütze
- 15: Fahrschiene (an 14; für 12, 13)
- 16: Auffangeinrichtung (an 13)
- 17: Werkstückgreifer (an 5, 6 und 12)
- 18: Werkstückspeicher (auf 16)
- 19: Übergabeöffnung (in 7)

## Patentansprüche

1. Ladeeinrichtung zum Transport von Werkstücken (3) von einer Bereitstellung, vorzugsweise Werkstücktransporteinrichtung zu einer Bearbeitungsmaschine (1) und umgekehrt, oder zwischen Bearbeitungsmaschinen, mit einem oberhalb der Bearbeitungsstelle angeordneten Ladeportal (4, 10, 14, 15), auf dem Linear-Roboter (5, 6), Knickarmroboter (12) oder ähnliche Einrichtungen zum Transport und zur Abgabe bzw. Aufnahme der Werksstücke (3) an bzw. von der Bearbeitungsmaschine (1) verfahrbar angeordnet sind, **dadurch gekennzeichnet, dass** mit den verfahrbaren Einrichtungen (5, 6, 12) auch ein oder mehrere unter den Werkstücken (3) angeordnete wannenartige Auffangeinrichtungen (7, 16) an dem Ladeportal (4, 10, 14, 15) verfahrbar angeordnet sind.

2. Ladeeinrichtung nach Anspruch 1, **dadurch gekennzeichnet, dass** auf der Auffangeinrichtung (7, 16) Werkstückspeicher (18) zur Aufnahme von ein oder mehreren Werkstücke (3) angeordnet sind.

3. Ladeeinrichtung nach Anspruch 1 oder 2, **dadurch gekennzeichnet, dass** in der Auffangeinrichtung (7, 16) eine Übergabeöffnung (19) für die Werkstücke (3) angeordnet ist.

4. Ladeeinrichtung nach Anspruch 1, 2 oder 3, **dadurch gekennzeichnet, dass** die Auffangeinrichtung (7) relativ zu der verfahrbaren Einrichtung (5, 6) verschiebbar ist.

5. Ladeeinrichtung nach Anspruch 4, **dadurch gekennzeichnet, dass** die Auffangeinrichtung (7) auf parallel zur Fahrschiene (10) angeordneten Fahrschienen (8) verschiebbar ist, wobei die Fahrschiene (8) an Halteeinrichtungen (11) befestigt ist, die wiederum auf der Fahrschiene (10) verfahrbar sind.

6. Ladeeinrichtung nach Anspruch 1 oder 2, **dadurch gekennzeichnet, dass** an den verfahrbaren Einrichtungen (5, 6, 12) Werkstückgreifer (17) angeordnet sind, die während des Verfahrens der Einrichtungen (5, 6, 12) auf den Fahrschienen (10, 15) in einer Schutzstellung oberhalb der Auffangeinrichtung (7, 16) positioniert sind.

## Claims

1. Loading device for transporting workpieces (3) from a readiness position, preferably a workpiece transport device, to a machining unit (1) and vice versa, or between machining units, the device comprising a loading portal (4, 10, 14, 15) above the machining site on which are displaceably arranged linear robots (5, 6), bent-arm robots (12) or similar devices for transporting and releasing or picking up the workpieces (3) at or from the machining unit (1), **characterized in that** one or more tray-like catching means (7, 16), which are arranged under the workpieces (3), are also arranged displaceably with the displaceable devices (5, 6, 12) at the loading portal (4, 10, 14, 15).

2. Loading device according to claim 1, **characterized in that** workpiece storage means (18) used for picking up one or more workpieces (3) are arranged on the catching means (7, 16).

3. Loading device according to claim 1 or 2, **characterized in that** a transfer opening (19) for the workpieces (3) is arranged in the catching means (7, 16).

4. Loading device according to claim 1, 2 or 3, **characterized in that** the catching means (7) is displaceable relative to the displaceable device (5, 6).

5. Loading device according to claim 4, **characterized in that** the catching means (7) is displaceable on travel rails (8) which are arranged parallel to a travel rail (10), wherein the travel rail (8) is fastened to holding means (11), the holding means (11) being in turn displaceable on the travel rail (10).

6. Loading device according to claim 1 or 2, **characterized in that** workpiece grippers (17) are arranged at the displaceable devices (5, 6, 12), the workpiece grippers (17) being positioned in a protective position above the catching means (7, 16) during the displacement of the devices (5, 6, 12) along the travel rails (10, 15).

## Revendications

1. Dispositif de chargement servant à transporter des pièces (3) d'une mise à disposition, de préférence d'un dispositif de transport de pièces vers une machine d'usinage (1) et inversement ou entre des machines d'usinage, avec un portique de chargement (4, 10, 14, 15) disposé au-dessus du poste d'usinage, sur lequel sont disposés de manière mobile des robots linéaires (5, 6), des robots à bras articulé (12) ou des dispositifs similaires pour le transport et la distribution et/ou réception de pièces (3) au niveau de la machine d'usinage (1) ou depuis celle-ci, **caractérisé en ce qu'**en plus des dispositifs mobiles (5, 6, 12), un ou plusieurs dispositifs de réception (7, 16) en forme de cuve, disposés sous les pièces (3) sont également disposés au niveau du portique de chargement (4, 10, 14, 15).

2. Dispositif de chargement selon la revendication 1, **caractérisé en ce que** des magasins de pièces (18) servant à recevoir une ou plusieurs pièces (3) sont disposés sur le dispositif de réception (7, 16).

3. Dispositif de chargement selon la revendication 1 ou 2, **caractérisé en ce qu'**une ouverture de transfert (19) pour les pièces (3) est disposée dans le dispositif de réception (7, 16).

4. Dispositif de chargement selon la revendication 1, 2 ou 3, **caractérisé en ce que** le dispositif de réception (7) peut être déplacé par rapport au dispositif mobile (5, 6).

5. Dispositif de chargement selon la revendication 4, **caractérisé en ce que** le dispositif de réception (7) peut être déplacé sur des rails de roulement (8) disposés de manière parallèle au rail de roulement (10), le rail de roulement (8) étant fixé au niveau des dispositifs de retenue (11), pouvant être déplacés à leur tour sur le rail de roulement (10).

6. Dispositif de chargement selon la revendication 1 ou 2, **caractérisé en ce que** des éléments de préhension de pièces (17) qui sont positionnés pendant le déplacement des dispositifs (5, 6, 12) sur les rails de roulement (10, 15) dans une position de sécurité au-dessus du dispositif de réception (7, 16), sont disposés au niveau des dispositifs déplaçables (5, 6, 12).
